# EUROPEAN PATENT APPLICATION

(11) **EP 4 697 458 A1**
(43) Date of publication of application: **18.02.2026**
(21) Application number: 25775872.2
(22) Date of filing: 11.02.2025
(51) Int. Cl.: H01M 50/102, B21D 17/04, B30B 11/16

(54) **SYSTEM AND METHOD FOR MANUFACTURING BATTERY CELL PACKAGING MATERIAL**

(30) Priority: 29.03.2024 KR 20240043482
(71) Applicant: LG Energy Solution, Ltd., Seoul 07335 (KR)
(72) Inventor: SEON, Sang Ok, Daejeon 34122 (KR)
(74) Representative: Plasseraud IP
(86) International application number: PCT/KR2025/001965
(87) International publication number: WO 2025/206574

(57) **Abstract**

Disclosed are a battery cell packaging manufacturing system and manufacturing method. The battery cell packaging manufacturing system includes a press roll that presses and rolls a plate-shaped material, has a concave portion extending along the circumference of the press roll, and forms embossed portions on the plate-shaped material through the concave portion when the plate-shaped material is rolled, and a punching part used to form an electrode installation recess in the plate-shaped material by pressing a point of the plate-shaped material, and causing the embossed portions of the plate-shaped material to be stretched to form a side surface of the electrode installation recess.

## Description

### [TECHNICAL FIELD]

The present disclosure relates to a battery cell packaging manufacturing system and manufacturing method capable of improving the quality and rigidity of packaging when manufacturing battery cell packaging.

### [BACKGROUND ART]

Recently, technologies for reducing carbon are being actively developed to solve environmental problems such as abnormal temperatures. In order to reduce carbon, energy needs to be produced in an eco-friendly way rather than using fossil fuels, the produced energy needs to be stored in the form of electric energy, and the stored electric energy needs to be used in vehicles, various industrial sites, and homes.

In order to utilize electric energy for reducing carbon, the use of batteries that can store and extract electric energy is essential. Therefore, securing battery performance is essential in order to store a sufficient amount of electric energy and use the same without inconvenience.

Batteries mainly utilize the oxidation-reduction reaction of metal ions, and metal ions are used in high density to increase the capacity, charge/discharge performance, and efficiency of batteries. Further, research is being conducted on materials that make up electrolytes and solid electrolytes. However, as battery performance develops, there is a problem that stability decreases, in general.

Batteries used in vehicles, industries, and homes are manufactured as physical units called packs. Battery packs perform the functions of preventing fire from spreading to the outside in the event of an accident such as battery thermal runaway by embedding and sealing multiple battery cells inside a battery case, and protecting the internal battery cells from being deteriorated by the influence of the external environment or damaged for physical reasons.

In a battery pack, multiple battery cells are embedded in an intermediate form of a module or assembly (cell module assembly (CMA)). In the case of a battery module or assembly, multiple battery cells are assembled into a single module or assembly, and multiple modules are fastened inside a pack case, thereby completing a battery pack. At the time of maintenance of a battery, maintenance is made easy by allowing maintenance to be performed in units of such modules or assemblies.

Multiple unit battery cells constituting a module or assembly are composed of a cathode, an anode, and an electrolyte. Since battery cells generate heat during charging and discharging, effective heat dissipation for the battery cells is required. In addition, design for efficient heat dissipation is necessary to prevent safety accidents from the perspective of battery modules, assemblies, and battery packs.

Meanwhile, battery cells are packaged using packaging materials that wrap and protect electrodes. In the case of such packaging materials, films or panels formed of materials such as aluminum are generally used to reduce the weight of a battery cell and increase the energy density.

However, in the process of forming a film or a panel, excessive forming may cause bursting or defects at the corners of packaging. Such defects are sometimes difficult to detect with the naked eye.

Therefore, in the process of manufacturing battery cell packaging, a technique for improving the molding quality of packaging and ensuring sufficient rigidity is required.

The matters described as the background technology above are only for the purpose of increasing understanding of the background of the present disclosure and should not be accepted as acknowledging that they correspond to prior art already known to those skilled in the art.

### [DETAILED DESCRIPTION OF INVENTION]

### [TECHNICAL PROBLEMS]

The present disclosure has been proposed to solve such problems, and provides a battery cell packaging manufacturing system and manufacturing method capable of stably forming a battery cell case while preventing cracks or tears from occurring in a plate-shaped material forming the battery cell case when a punching part presses the plate-shaped material in a battery cell packaging manufacturing process.

The technical objects to be achieved in the present disclosure are not limited to the technical objects mentioned above, and other technical objects not mentioned can be clearly understood by those skilled in the art to which the present disclosure belongs from the description below.

### [TECHNICAL SOLUTION]

A battery cell packaging manufacturing system according to the present disclosure to achieve the objects includes a press roll for pressing and rolling a plate-shaped material, the press roll having a concave portion extending along the circumference of the press roll, and forming embossed portions on the plate-shaped material through the concave portion when the plate-shaped material is rolled, and a punching part for forming an electrode installation recess in the plate-shaped material by pressing a point of the plate-shaped material, and causing the embossed portions of the plate-shaped material to be stretched to form a side surface of the electrode installation recess.

In the battery cell packaging manufacturing system according to the present disclosure, the concave portion of the press roll may be formed by recessing a point of the press roll toward the inside of the press roll.

In the battery cell packaging manufacturing system according to the present disclosure, the concave portion may have a ring shape extending along the outer circumference of the press roll.

In the battery cell packaging manufacturing system according to the present disclosure, the press roll may press the plate-shaped material to reduce the thickness of the plate-shaped material, and the embossed portions may be formed at points of the plate-shaped material corresponding to the concave portion of the press roll.

In the battery cell packaging manufacturing system according to the present disclosure, a pair of concave portions may be formed at positions spaced apart from each other on the outer circumference of the press roll.

In the battery cell packaging manufacturing system according to the present disclosure, the plate-shaped material has a pair of lengthwise embossed portions formed corresponding to the pair of concave portions and extending in the longitudinal direction.

In the battery cell packaging manufacturing system according to the present disclosure, in the plate-shaped material, the pair of embossed portions spaced apart from each other may form an embossed portion set, and the pair of embossed portions of the embossed portion set may form facing side surfaces of the electrode installation recess.

In the battery cell packaging manufacturing system according to the present disclosure, a plurality of embossed portion sets spaced apart from each other may be formed on the plate-shaped material, a plurality of electrode installation recesses may be formed in the plate-shaped material using the punching part, and the plurality of embossed portion sets may constitute side surfaces of the corresponding electrode installation recesses.

In the battery cell packaging manufacturing system according to the present disclosure, lengthwise embossed portions may be formed on the plate-shaped material through the concave portions of the press roll, and the press roll may form widthwise embossed portions on the plate-shaped material through position or pressing force control during a process of rolling the plate-shaped material.

In the battery cell packaging manufacturing system according to the present disclosure, the widthwise embossed portions of the plate-shaped material may be formed by moving the position of the press roll away from the plate-shaped material in some section during a process of rolling the press roll or by reducing the pressing force applied to the plate-shaped material.

In the battery cell packaging manufacturing system according to the present disclosure, a pair of widthwise embossed portions may be formed on the plate-shaped material to be spaced apart from each other in the longitudinal direction of the plate-shaped material such that a pair of lengthwise embossed portions and the pair of widthwise embossed portions form a square shape.

In the battery cell packaging manufacturing system according to the present disclosure, the punching part may form the electrode installation recess by pressing the square formed by the pair of lengthwise embossed portions and the pair of widthwise embossed portions, and the lengthwise embossed portions and the widthwise embossed portions may be stretched to form a continuous side surface of the electrode installation recess.

In the battery cell packaging manufacturing system according to the present disclosure, a pair of electrode installation recesses may be formed in the plate-shaped material, and a bonding portion may be formed on edges of the electrode installation recesses.

In the battery cell packaging manufacturing system according to the present disclosure, the bonding portion may be formed along the outer perimeter of the embossed portions forming the electrode installation recesses.

In the battery cell packaging manufacturing system according to the present disclosure, the bonding portion may form a plane.

In the battery cell packaging manufacturing system according to the present disclosure, the embossed portions may be pressed and stretched by the punching part, and a point initially coming into contact with a corner of the punching part in the embossed portions may be formed to be the thickest.

In the battery cell packaging manufacturing system according to the present disclosure, a cross-sectional edge of the embossed portion may be a streamlined curved shape.

The battery cell packaging manufacturing system according to the present disclosure may further include a post-processing part for flattening remaining embossed portions present on the outside of the electrode installation recess formed in the plate-shaped material.

The battery cell packaging manufacturing system according to the present disclosure may further include a post-processing part for flattening remaining embossed portions present on the outside of the embossed portions forming the electrode installation recess among the embossed portions formed on the plate-shaped material.

A battery cell packaging manufacturing method according to the present disclosure includes supplying a plate-shaped material, forming embossed portions on the plate-shaped material by pressing the supplied plate-shaped material through a press roll on which a concave portion is formed, and forming an electrode installation recess in the plate-shaped material by pressing the plate-shaped material on which the embossed portions are formed using a punching part such that the embossed portions forms a side surface of the electrode installation recess.

### [EFFECT OF INVENTION]

According to the battery cell packaging manufacturing system and manufacturing method of the present disclosure, it is possible to prevent cracking or tearing of a plate-shaped material when the plate-shaped material is pressed by a punching part in a battery cell packaging manufacturing process, and at the same time, to stably form a battery cell case, thereby improving the stability of battery cell packaging and a higher level system utilizing the same.

The effects obtained from the present disclosure are not limited to the effects mentioned above, and other effects not mentioned can be clearly understood by those skilled in the art to which the present disclosure belongs from the description below.

### [BRIEF DESCRIPTION OF THE DRAWING]

FIG. 1 is a diagram showing the inside of a pouch-type battery cell in one embodiment of the present disclosure.
FIG. 2 is a diagram showing an electrode assembly in one embodiment of the present disclosure.
FIG. 3 is a plan view of the pouch-type battery cell in one embodiment of the present disclosure.
FIGS. 4 to 5 are diagrams showing a battery cell packaging manufacturing system according to one embodiment of the present disclosure.
FIG. 6 is a diagram showing a punching part of the battery cell packaging manufacturing system of the present disclosure.
FIG. 7 is a diagram showing a case in which a plate-shaped material is pressed by the punching part in the battery cell packaging manufacturing system of the present disclosure.
FIG. 8 is a diagram showing a process of forming a widthwise embossed portion in the battery cell material manufacturing system of the present disclosure.
FIG. 9 is a diagram showing another embodiment of a process of forming a widthwise embossed portion of the present disclosure.
FIGS. 10 to 14 are cross-sectional views showing various embodiments of the embossed portion cut along A-A' line of FIG. 3.
FIG. 15 is a diagram showing a post-processing part for removing a remaining embossed portion in the battery cell packaging manufacturing system of the present disclosure.
FIG. 16 is a diagram showing a plate-shaped material in a state in which the remaining embossed portion has been removed according to the post-processing part shown in FIG. 12.
FIG. 17 is a cross-sectional view of battery cell packaging manufactured according to the battery cell packaging manufacturing system according to one embodiment of the present disclosure.
FIG. 18 is a flowchart of a battery cell packaging manufacturing method according to one embodiment of the present disclosure.

### [BEST MODE FOR CARRYING OUT THE INVENTION]

In describing the embodiments disclosed in this specification, if it is determined that a specific description of related known technology may obscure the gist of the embodiments disclosed in this specification, the detailed description thereof will be omitted. In addition, the attached drawings are only intended to facilitate easy understanding of the embodiments disclosed in this specification, the technical ideas disclosed in this specification are not limited by the attached drawings, and the attached drawings should be understood to include all modifications, equivalents, or substitutes included in the spirit and technical scope of the present disclosure.

The singular expression includes the plural expression unless the context clearly indicates otherwise.

In this specification, terms "comprise" and "include" specify the presence of stated features, integers, steps, operations, elements, components, and/or combinations thereof, but do not preclude the presence or addition of one or more other features, integers, steps, operations, elements, components, and/or combinations.

The suffixes "module" and "unit" used to signify components are used herein to help the understanding of the components and thus they should not be considered as having specific meanings or roles.

When an element is "coupled" or "connected" to another element, it should be understood that a third element may be present between the two elements although the element may be directly coupled or connected to the other element. When an element is "directly coupled" or "directly connected" to another element, it should be understood that no element is present between the two elements.

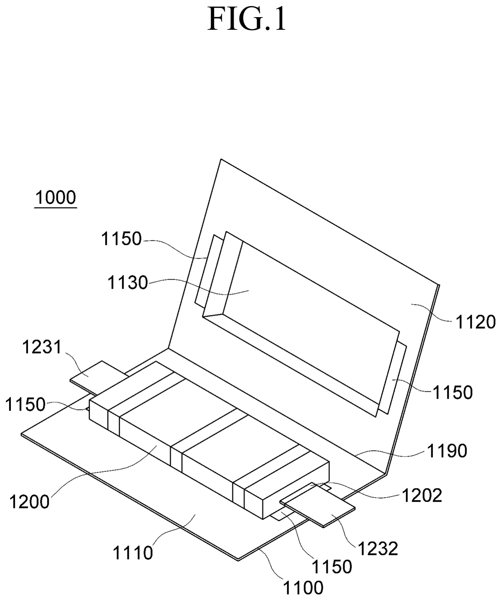

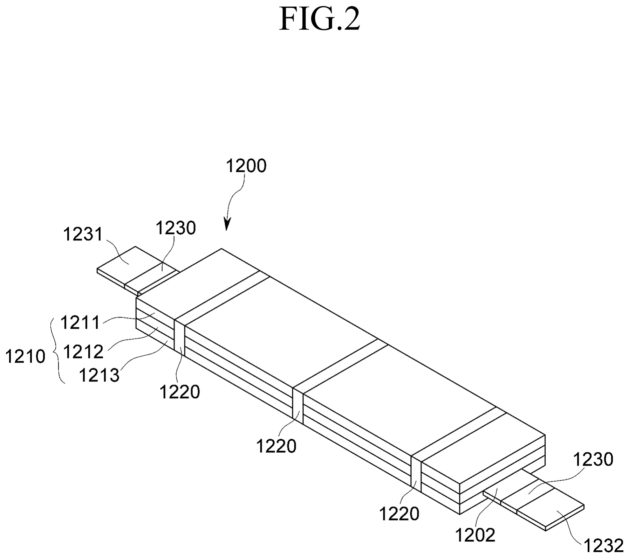

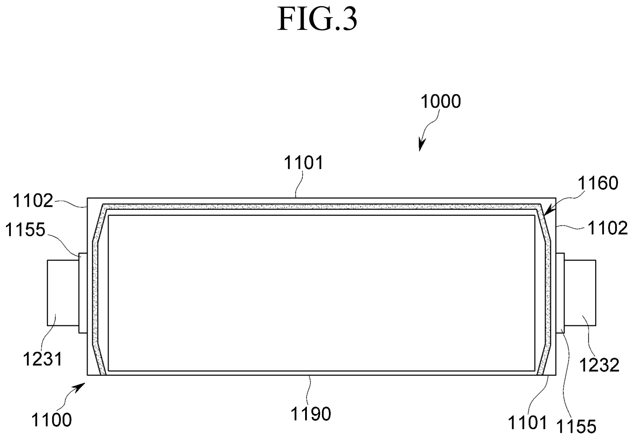

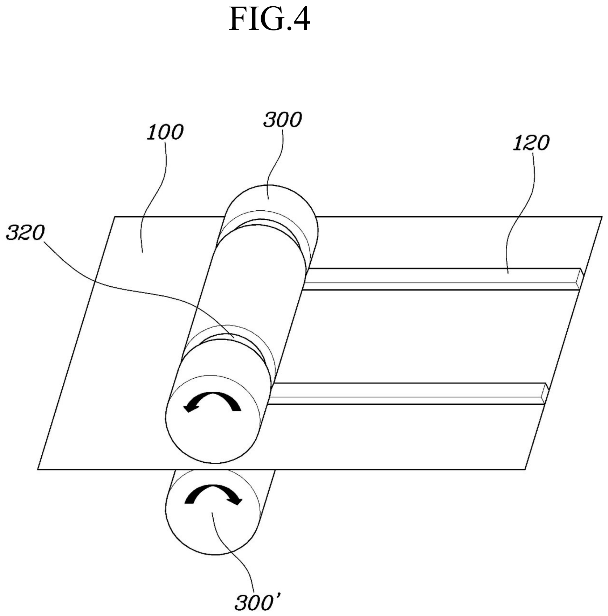

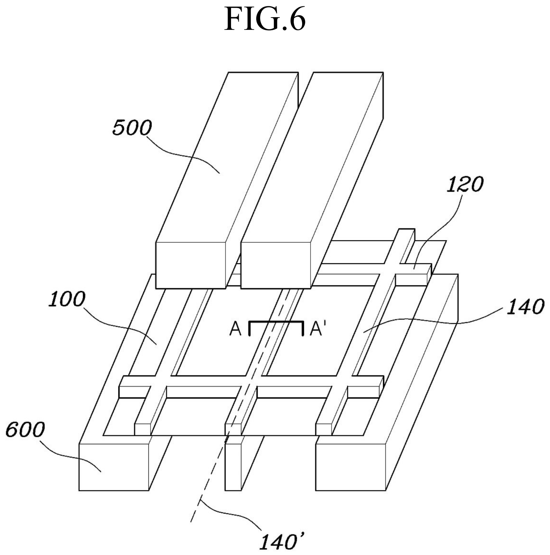

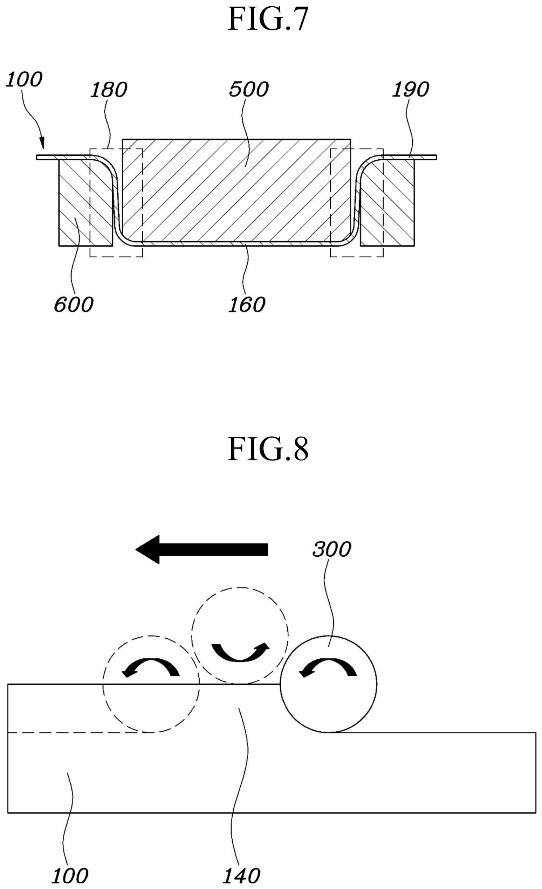

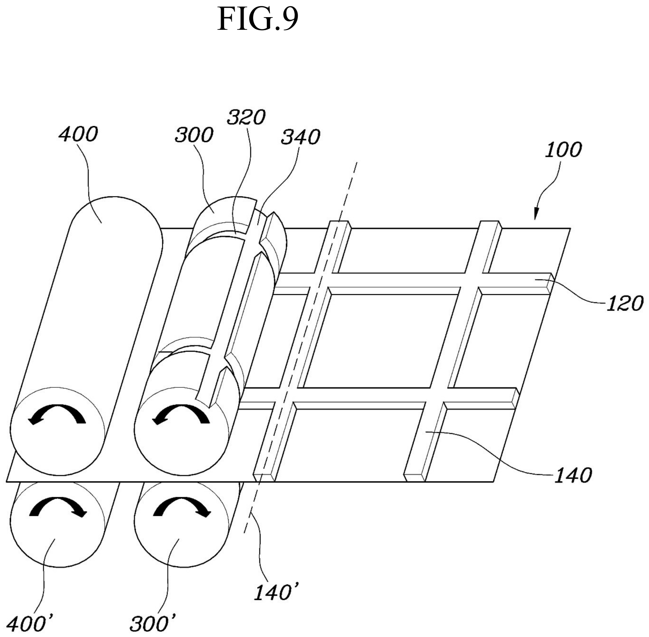

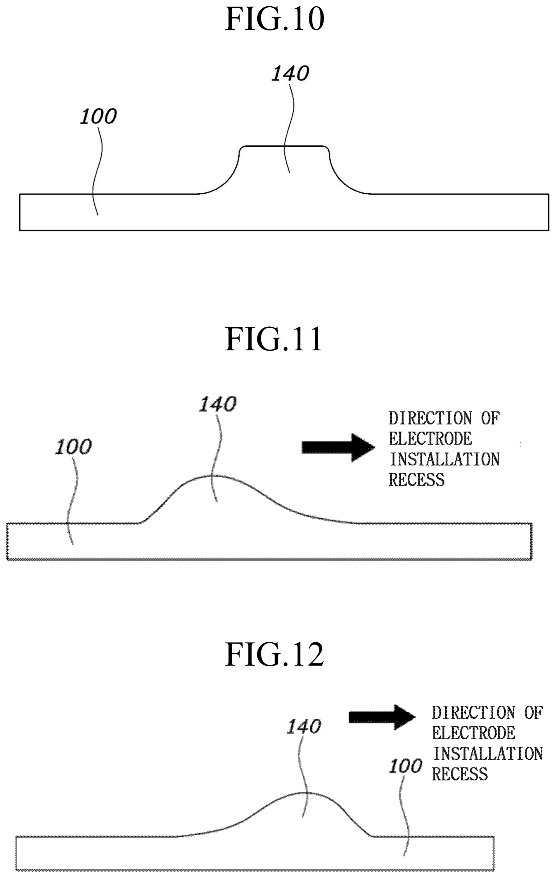

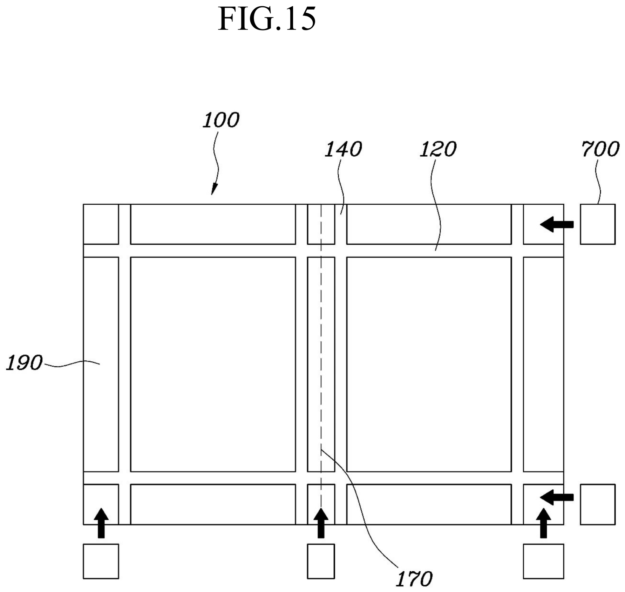

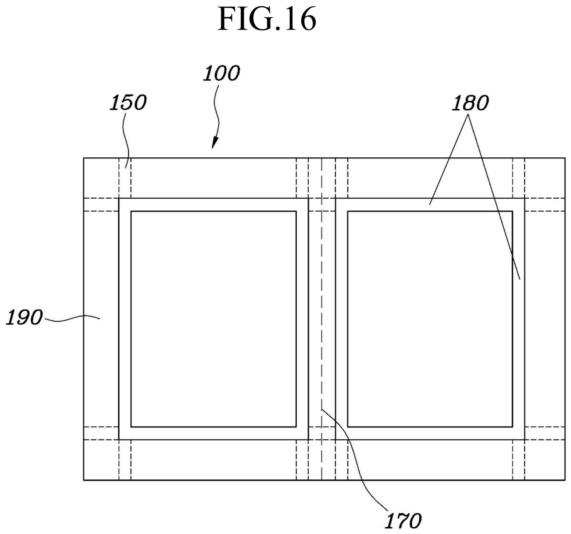

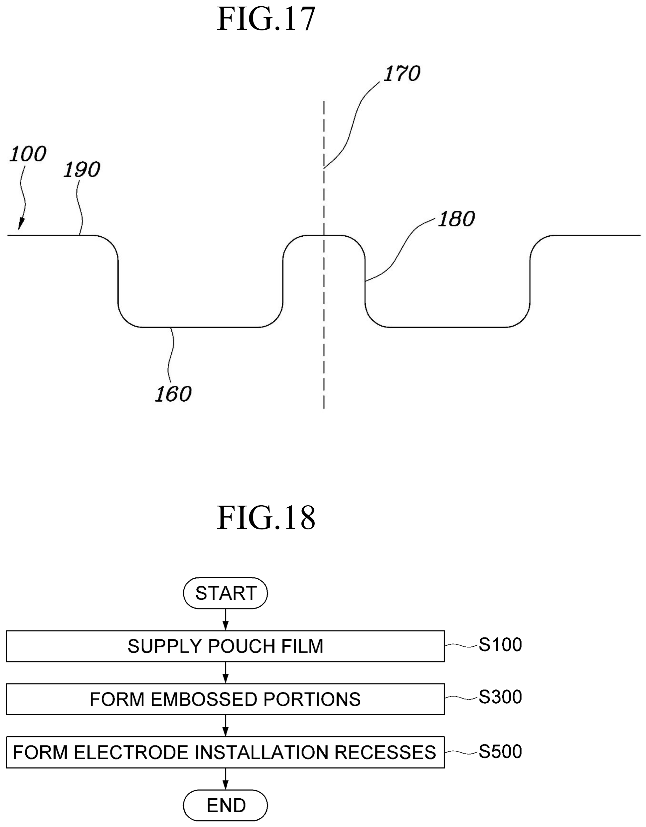

FIG. 1 is a diagram showing the inside of a pouch-type battery cell in one embodiment of the present disclosure, FIG. 2 is a diagram showing an electrode assembly in one embodiment of the present disclosure, FIG. 3 is a plan view of the pouch-type battery cell in one embodiment of the present disclosure, FIGS. 4 to 5 are diagrams showing a battery cell packaging manufacturing system according to one embodiment of the present disclosure, FIG. 6 is a diagram showing a punching part of the battery cell packaging manufacturing system of the present disclosure, FIG. 7 is a diagram showing a case in which a plate-shaped material is pressed by the punching part in the battery cell packaging manufacturing system of the present disclosure, FIG. 8 is a diagram showing a process of forming a widthwise embossed portion in the battery cell material manufacturing system of the present disclosure, FIG. 9 is a diagram showing another embodiment of a process of forming a widthwise embossed portion of the present disclosure, FIGS. 10 to 14 are cross-sectional views showing various embodiments of the embossed portion cut along A-A' line of FIG. 3, FIG. 15 is a diagram showing a post-processing part for removing a remaining embossed portion in the battery cell packaging manufacturing system of the present disclosure, FIG. 16 is a diagram showing a plate-shaped material in a state in which the remaining embossed portion has been removed according to the post-processing part shown in FIG. 12, FIG. 17 is a cross-sectional view of battery cell packaging manufactured according to the battery cell packaging manufacturing system according to one embodiment of the present disclosure, and FIG. 18 is a flowchart of a battery cell packaging manufacturing method according to one embodiment of the present disclosure.

Hereinafter, the embodiments disclosed in this specification will be described in detail with reference to the attached drawings, and regardless of symbols, identical or similar components will be given the same reference numerals and redundant descriptions thereof will be omitted.

A vehicle battery is manufactured by combining multiple battery cells to protect a battery from external physical impact and to respond to specific devices or environments. Specifically, a battery has a structure in which multiple battery cells are assembled into a module or an assembly and multiple battery modules are combined to form a battery pack. A battery cell needs to have a high capacity per unit volume in order to maximize performance in a limited space inside a vehicle, and since such high energy density can improve the driving range, charging time, and safety of the vehicle, it is important to design the battery cell such that the battery cell has a high energy density.

A battery cell having a high energy density can improve the performance of a battery, and thus efforts are being made to efficiently laminate battery cells in a battery cell case at a high density. A battery cell case is manufactured using battery cell packaging as a material, and the battery cell case may be classified into rectangular, cylindrical, and pouch types depending on the shape in which battery cell components are contained.

Prior to describing a battery cell packaging manufacturing system according to one embodiment of the present disclosure, a battery cell 1000 will first be described.

FIG. 1 is a diagram showing the inside of a pouch-type battery cell in one embodiment of the present disclosure, FIG. 2 is a diagram showing an electrode assembly in one embodiment of the present disclosure, and FIG. 3 is a plan view of the pouch-type battery cell in one embodiment of the present disclosure.

In the present embodiment, the battery cell 1000 may be a pouch-type battery cell 1000. However, the battery cell 1000 does not necessarily have to be provided in a pouch-type form and may be provided in a rectangular form, a cylindrical form, or other various forms.

In the present embodiment, the battery cell 1000 includes an electrode assembly 1200 and a battery case 1100 that accommodates the electrode assembly 1200.

The battery case 1100 is for accommodating the electrode assembly 1200 and may be a pouch-type battery case 1100.

In one embodiment of the present disclosure, the battery case 1100 includes a lower case 1110 and an upper case 1120 that covers the lower case 1110, and the lower case 1110 and the upper case 1120 may be formed integrally. In addition, as illustrated in FIG. 1, the lower case 1110 and the upper case 1120 may be connected to each other, and the connecting part of the lower case 1110 and the upper case 1120 may be folded along a folding line 1190.

Both the lower case 1110 and the upper case 1120 may be formed in a laminate structure including an inner covering layer, a metal layer, and an outer covering layer.

In the battery case 1100, the inner covering layer is located inside the battery case 1100 based on the metal layer, and the inner covering layer is in direct contact with the electrode assembly 1200 and thus needs to have insulation and electrolytic resistance. For sealing, a sealing part where inner layers are thermally bonded is required to have excellent thermal bonding strength.

As a material for the inner covering layer, polyolefin resins such as polypropylene, polyethylene, polyethylene acrylic acid, and polybutylene, which have excellent chemical resistance and high sealing properties, polyurethane resin, and polyimide resin may be selected, and polypropylene (PP), which has excellent mechanical properties such as tensile strength, rigidity, surface hardness, and impact strength, and chemical resistance, is most preferable.

The metal layer is located between the inner covering layer and the outer covering layer and is a barrier layer for preventing moisture or various gases from penetrating into the battery from the outside. A preferable material for the metal layer in contact with the inner covering layer is an aluminum (Al) thin film that is lightweight and has excellent formability.

The outer covering layer, which is located on the outside of the battery case 1100 based on the metal layer, may use a heat-resistant polymer with excellent tensile strength, moisture permeation prevention property, and air permeation prevention property to protect the electrode assembly 1200 and ensuring heat resistance and chemical resistance. For example, nylon or polyethylene terephthalate can be used as a material of the outer covering layer, but the material is not limited thereto.

A receiving recess 1130 may be formed in the lower case 1110 and/or the upper case 1120. The receiving recess 1130 is for receiving the electrode assembly 1200 inside the battery case 1100. The receiving recess 1130 of the upper case 1120 may be positioned above the receiving recess 1130 of the lower case 1110, and the electrode assembly 1200 may be accommodated in the receiving recesses 1130 of the upper and lower cases 1120 and 1110.

In addition, a protective tape 1150 may be attached to each of the lower case 1110 and the upper case 1120. The protective tape 1150 is provided to protect the battery case 1100 from welding foreign materials generated when a welded portion 1230 of the electrode assembly 1200 is formed and to protect the battery case 1100 when a sealing part is formed by heat-melting the edge of the battery case 1100 and may be attached to the lower case 1110 and the upper case 1120.

In the lower case 1110 and the upper case 1120, the protective tape 1150 is attached to the welded portion 1230 of the electrode assembly 1200 or the edge of the lower case 1110 where electrode leads 1231 and 1232 are located. As illustrated in FIG. 2, in the electrode assembly 1200, the two electrode leads 1231 and 1232 may extend in opposite directions, and the protective tape 1150 may be attached to each of both edges of the lower case 1110 and the upper case 1120 where the welded portion 1230 or the electrode leads 1231 and 1232) are disposed.

Therefore, the protective tape 1150 may be positioned at edges of the upper case 1120 between the upper end of the receiving recess 1130 formed in the upper case 1120 and the upper end of the upper case 1120 and between the lower end of the receiving recess 1130 and the lower end of the upper case 1120, and the protective tape 1150 may have an area larger than the welded portion 1230 of the electrode assembly 200 in a plane.

The electrode assembly 1200 housed in the battery case 1100 may be one of a group consisting of a jelly-roll type electrode assembly having a structure in which a separator is interposed between long a sheet-shaped cathode and anode and then rolled up, a stack type electrode assembly having unit cells having a structure in which a rectangular cathode and anode are laminated with a separator interposed therebetween, a stack-folding type electrode assembly in which unit cells are rolled up by a long separation film, and a lamination-stack type electrode assembly in which unit cells are laminated with a separator interposed therebetween and attached to each other.

In the present disclosure, the electrode assembly 1200 may include, for example, an electrode laminate 1210, and a fixing tape 1220 for rolling the electrode laminate 1210, as illustrated in FIG. 2.

The electrode laminate 1210 may include a cathode 1211, an anode 1213, and a separator 1212 disposed between the cathode 1211 and the anode 1213, and may be formed in a form in which the length of the electrode laminate 1210 in the longitudinal direction is relatively greater than the length in the width direction.

The fixing tape 1220 is for fixing the electrode laminate 1210 in which the cathode 1211, the separator 1212, and the anode 1213 are laminated and fixes the electrode laminate 1210 by winding the outside of the electrode laminate 1210.

In addition, the electrode assembly 1200 may include two electrode tabs 1201 and 1202 and two electrode leads 1231 and 1232.

The electrode tabs 1201 and 1202 are formed to protrude outwardly from the electrode laminate 1210, one 1201 of the two electrode tabs 1201 and 1202 may be a cathode tab connected (extended) to the cathode 1211, and the other electrode tab 1202 may be an anode tab connected (extended) to the anode 1213.

The electrode leads 1231 and 1232 are connected to the electrode tabs 1201 and 1202 and may be connected to the electrode tabs 1201 and 1202 by welding. Any material can be used as the material of the electrode leads 1231 and 1232 as long as it is an electrically conductive material. For example, the material of the electrode leads 1231 and 1232 may include at least one of copper (Cu), aluminum (Al), nickel (Ni), iron (Fe), carbon (C), chromium (Cr), and manganese (Mn). However, the electrode leads 1231 and 1232 are not limited to the materials described above, and the material of the electrode leads 1231 and 1232 may be selected in various ways in consideration of mechanical strength, flexibility, and processability.

For example, certain portions of the electrode leads 1231 and 1232 and the electrode tabs 1201 and 1202 overlap vertically to form welded portions 1230, and the electrode tabs 1201 and 1202 and the electrode leads 1231 and 1232 can be connected to each other by the welded portions 1230.

The welded portions 1230 may be formed by, for example, ultrasonic welding. Ultrasonic welding rapidly performs welding by applying high-frequency vibration generated by high-frequency ultrasonic waves of about 20 kHz such that the vibration energy is converted into heat energy by friction at the interface between the electrode tabs 1201 and 1202 and the electrode leads 1231 and 1232. In addition, as another example, the welded portions 1230 may be formed by laser welding.

One electrode lead 1231 of the two electrode leads 1231 and 1232 may be a cathode lead connected to the cathode tab, and the other electrode lead 1232 may be an anode lead connected to the anode tab. The cathode lead may be made of, for example, aluminum, and the anode lead may be made of, for example, copper or nickel-coated copper, but is not limited thereto.

The two electrode leads 1231 and 1232 illustrated in FIG. 2 are disposed on both sides of the electrode assembly 1200, but may be disposed on one side of the electrode assembly 1200 depending on the arrangement of the electrode tabs 1201 and 1202. That is, when the two electrode tabs 1201 and 1202 are disposed on one side of the electrode assembly 1200, the two electrode leads 1231 and 1232 connected to the electrode tabs 1201 and 1202 may also be formed in the same direction of the electrode assembly 1200.

As shown in FIG. 3, a lead film 1155 may be attached to each of the electrode leads 1231 and 1232. The lead film 1155 connected to the electrode leads 1231 and 1232 is positioned between the electrode leads 1231 and 1232 and the battery case 1100 to prevent short circuits from occurring between the electrode leads 1231 and 1232 and the battery case 1100 and to improve sealing strength, thereby preventing leakage of the electrolyte.

In one embodiment of the present disclosure, the remaining portion except for the folding portion where the lower case 1110 and the upper case 1120 constituting the battery case 1100 are connected may be sealed by thermal compression.

That is, as shown in FIG. 3, a sealing part 1160 for sealing may be disposed in the remaining portion of the battery case 1100 except for the folding portion.

The sealing part 1160 may be disposed at the edge of the battery case 1100 and may be formed at the edge of the battery case 1100 excluding the folding portion (folding line 1190).

Specifically, as shown in FIG. 3, the battery case 1100 may be formed in a rectangular shape on a plane, and may have a pair of long sides 1101 spaced apart from each other and a pair of short sides 1102 spaced apart from each other. The pair of short sides 1102 may be disposed on the left and right sides of the battery case 1100 and may connect the pair of long sides 1101.

Here, the folding line 1190 may be disposed on one long side 1101, and the sealing part 1160 may be formed on the remaining three sides 1101 and 1102 except for one side on which the folding line 1190 is disposed.

The present disclosure is for manufacturing packaging for packaging such a battery cell, and the present disclosure may be applied to manufacturing of packaging for all shapes of battery cells such as a rectangular, a cylindrical, and pouch-type battery cells. In the present disclosure, battery cell packaging constituting the battery cell case uses a plate-shaped material 100, and the plate-shaped material 100 (pouch sheet) is a metal material and may require insulation coating. In addition, the plate-shaped material 100 according to the present disclosure may be formed in the form of a film in the case of a pouch-type cell, and may be formed in the form of a thin plate or panel in the case of a rectangular or cylindrical cell.

In the case of batteries installed in vehicles, it is necessary to prevent performance deterioration due to a collision and secondary damage due to fire, and thus the plate-shaped material 100 constituting the battery cell case may be formed from a metal material, and may manufactured using aluminum, which is easy to form, light in weight, and has excellent durability among metals.

Referring to FIGS. 4 to 7, a battery is manufactured by placing the plate-shaped material 100 (pouch sheet) forming a battery cell case on a mold, pressing the plate-shaped material 100 using a punching part 500 to form a pair of electrode installation recesses 160 (corresponding to the receiving recesses 1130 in FIG. 1), inserting (stacking) a battery material (electrode assembly 1200) into one of the formed electrode installation recesses 160, and then folding the remaining electrode installation recess 160 to overlap the electrode installation recess 160 into which the battery material (electrode assembly 1200) is inserted (stacking). In this case, a space other than the space occupied by the battery material (electrode assembly 1200) in one electrode installation recess 160 is sealed along a bonding portion 190 to prevent the battery material inside from being damaged by physical and chemical factors of the external environment.

The plate-shaped material 100 is a film or thin plate made of aluminum material, and forms the battery cell case (battery case 1100) including the electrode installation recesses 160. When the plate-shaped material 100 is placed on a punching die 600 and pressed using the punching part 500, the plate-shaped material 100 is stretched to form the electrode installation recess 160. In the process of pressing using the punching part 500, the plate-shaped material 100 generates maximum internal stress due to the pressing force at a portion 180 that comes into contact with the corner portion of the punching part 500, and thus the thickness thereof decreases and cracks or tears may occur in the plate-shaped material 100 due to the decreased thickness. That is, since the plate-shaped material 100 is provided as a thin plate in the process of forming the battery cell case, there is a problem in that the plate-shaped material 100 becomes thinner when pressed by the punching part 500.

In the present disclosure, an embossed portion 120 is formed on one or both sides of the plate-shaped material 100 by pressing the plate-shaped material 100 using a press roll 300 provided with a concave portion 320 during the battery cell case forming process. The embossed portion 120 is formed at portions of the plate-shaped material 100 that come into contact with the punching part 500, and thus even if the plate-shaped material 100 is pressed by the punching part 500, the plate-shaped material 100 can be prevented from being cracked or torn due to the thickness of the embossed portion 120.

The illustrated embodiment relates to a system and method for manufacturing a battery cell packaging by processing the film-shaped plate-shaped material 100 for manufacturing a pouch-type cell. In the case of pouch-type cells, a very thin film or plate-shaped material 100 is used, and thus it is difficult to secure quality when stretched. Therefore, the significant effect can be achieved when the present disclosure is applied. However, the embodiments of the present disclosure can be applied not only to such pouch-type cells but also to rectangular or cylindrical cells, and thus the scope of the present disclosure is not limited to a specific type of battery cell, but can be said to extend to all packaging technologies for packaging various types of battery cells.

The present disclosure provides a battery cell packaging manufacturing system in which the press roll 300 having the concave portion 320 formed along the circumference presses and rolls the plate-shaped material 100 to form the thick embossed portion 120 on one or both sides of the plate-shaped material 100, the punching part 500 presses specific portions partitioned by the embossed portion 120 to form electrode installation recesses 160, and, as a result, the pressed and stretched embossed portion 120 forms the side surfaces of the electrode installation recesses 160, thereby preventing tearing or cracking of the plate-shaped material 100 due to the punching part 500 during the process of forming the electrode installation recesses 160.

The press roll 300 of the present disclosure is provided with the concave portion 320 formed by recessing certain portions of the outer surface toward the inside of the press roll 300 as shown in FIG. 4, and a plurality of concave portions 320 may be formed in a ring shape extending along the circumference of the outer surface of the press roll 300. The press roll 300 provided with the concave portions 320 presses the plate-shaped material 100 to reduce the thickness of the plate-shaped material 100, and the embossed portion 120 is formed in the longitudinal direction of the plate-shaped material 100 at position where the concave portions 320 of the press roll 300 move on the plate-shaped material 100. The concave portions 320 may be formed integrally with the press roll 300 during the process of manufacturing the press roll 300, or may be formed through post-processing after the press roll 300 is manufactured.

The concave portions 320 of the press roll 300 may be formed as a pair at positions spaced apart from each other on the outer surface of the press roll 300, and in this case, a pair of lengthwise embossed portions 120 are formed in the longitudinal direction of the plate-shaped material 100 corresponding to the pair of concave portions 320. The embossed portions 120 formed by the concave portions 320 of the press roll 300 are disposed spaced apart from each other, and two adjacent embossed portions 120 form one set of embossed portions 120 as a pair. A pair of embossed portions 120 of a set of embossed portions 120 are pressed by the punching part 500 to form facing sides of the electrode installation recess 160 in which electrodes can be stacked (into which the electrode assembly 1200 can be inserted). A plurality of sets of embossed portions 120 is formed spaced apart from each other in the plate-shaped material 100 by the press roll 300 with the concave portions 320, and each set of embossed portions 120 forms the side surfaces of the electrode installation recess 160, and an adjacent pair of electrode installation recesses 160 may be folded based on the boundary 170 between the two electrode installation recesses 160 and overlap each other. In this manner, a pair of electrode installation recesses 160 are folded and overlapped, and then sealed along the bonding portion 190, thereby forming a battery cell case in which electrodes and main battery elements can be stacked.

The battery cell case may be manufactured using the plate-shaped material 100 such as an aluminum sheet. The pair of electrode installation recesses 160 are formed by pressing the plate-shaped material 100 using the punching part 500, and then electrodes (electrode assembly 1200) are disposed in one electrode installation recesses 160. Thereafter, the other electrode installation recess 160 is folded along the boundary 170 between this electrode installation recess 160 and the electrode installation recess 160 containing the electrodes (electrode assembly 1200) to overlap the electrode installation recess 160 containing the electrodes (electrode assembly 1200), and then sealed along the bonding portion 190 to complete the battery cell. In this case, the process of pressing the plate-shaped material 100 using the punching part 500 to form the electrode installation recesses 160 is essential in the process of forming the battery cell case. However, when the thin plate-shaped material 100 cannot withstand the strong pressing force of the punching part 500, a stretched portion 180, which is the portion that comes into contact with the corner of the punching part 500, is frequently torn or cracked during the stretching process.

Therefore, by forming the embossed portions 120 having a thickness on one or both sides of the plate-shaped material 100 before pressing the plate-shaped material 100 by the punching part 500, it is possible to prevent the stretched portion 180 of the plate-shaped material 100 from being torn or cracked even when pressed by the punching part 500. The battery cell case is formed in such a manner that two electrode installation recesses 160 are folded along the boundary 170 between the two electrode installation recesses 160 to overlap each other, and since the electrode installation recesses 160 are composed of a bottom surface on which electrodes are laminated and a side surface surrounding the bottom surface, the embossed portions 120 need to be disposed at positions corresponding to the side surfaces of the electrode installation recesses 160, which correspond to stretched portions 180 in the plate-shaped material 100. Accordingly, the embossed portions 120 need to be formed not only in the longitudinal direction of the plate-shaped material 100 but also in the width direction.

Since the electrode installation recesses 160 of the battery cell case have a bottom surface on which electrodes can be stacked and a side surface surrounding the bottom surface, the embossed portions 120 on the plate-shaped material 100 need to be formed not only in the longitudinal direction but also in the width direction. The widthwise embossed portions 140 may be formed by controlling the position of the press roll 300 moving in the longitudinal direction of the plate-shaped material 100 as shown in FIG. 8. The position of the press roll 300 can be controlled by moving the press roll 300 in the longitudinal direction of the plate-shaped material 100, moving the displacement of the press roll 300 away from the plate-shaped material 100 at a point where the side surface of the battery cell case is formed, forming embossed portions 140 of a desired size, and then moving the press roll 300 to the plate-shaped material 100 to apply pressure. By controlling the position of the press roll 300, the widthwise embossed portions 140 that intersect the lengthwise embossed portions 120 are formed at desired positions on one or both sides of the plate-shaped material 100, and the formed lengthwise embossed portions 120 and the widthwise embossed portions 140 are pressed by the punching part 500, thereby forming the side surfaces of the electrode installation recesses 160.

The widthwise embossed portions 140 may also be formed by controlling the pressing force of the press roll 300, as shown in FIG. 8. Since the press roll 300 presses and rolls the plate-shaped material 100, the thickness of the plate-shaped material 100 can be adjusted by increasing or decreasing the pressing force of the press roll 300 at a point of the plate-shaped material 100. The pressing force control of the press roll 300 is achieved by repeating the operation of reducing the pressing force of the press roll 300 at points where the embossed portions 140 are desired to be formed on the plate-shaped material 100 to form the thick embossed portions 140, and then increasing the pressing force of the press roll 300 to press the plate-shaped material 100.

As indicated by the solid line in FIG. 8, the displacement or pressing force of the press roll 300 that presses and rolls the plate-shaped material 100 is controlled at a point where the widthwise embossed portion 140 is desired to be formed on the plate-shaped material 100 according to position control or pressing force control, thereby forming the widthwise embossed portion 140, and then the press roll 300 continuously presses and rolls the plate-shaped material 100 in the direction indicated by the dotted line in FIG. 8. In this manner, it is possible to form a plurality of widthwise embossed portions 140 on one or both sides of the plate-shaped material 100.

In addition, as shown in FIG. 9, the embossed portions 140 may be formed in the width direction of the plate-shaped material 100 by forming a concave portion 340 in the longitudinal direction of the press roll 300 in a direction intersecting the concave portions 320 formed along the outer circumference of the press roll 300. In this case, the spacing between the embossed portions 140 in the width direction of the plate-shaped material 100 is adjusted according to the circumference of the press roll 300, and thus the spacing between the embossed portions 140 in the width direction increases as the circumference of the press roll (300) increases. Since the widthwise embossed portions 140 form the side surfaces of the electrode installation recesses 160, it is reasonable for the widthwise embossed portions 140 to have the same thickness as the lengthwise embossed portions 120. However, in some cases, the electrode installation recesses 160 may be formed in various shapes by making a difference in the thickness of the widthwise embossed portions 140 and the lengthwise embossed portions 120.

Referring to FIG. 6, when forming the electrode installation recesses 160, the plate-shaped material 100 is placed on the punching die 600 and pressed by the punching part 500. The punching die 600 is provided to form the electrode installation recesses 160 when the plate-shaped material 100 is pressed by the punching part 500. Since the height of the electrode installation recesses 160 can be determined according to the height of the punching die 600, it is important to select an appropriate punching die 600 in consideration of the battery material and the capacity of the battery cell. As illustrated, the punching die 600 may include two large punching dies 600 located on both sides and a relatively small punching die 600 located therebetween used to form a pair of electrode installation recesses 160. When the small punching die 600 is used as a boundary, it is easy to form the electrode installation recesses 160 of a uniform size on both sides, and the plate-shaped material 100 can be maintained in a stretched state without being bent in the center due to the small punching die 600 that supports the plate-shaped material 100 in the center, and thus the electrode installation recesses 160 can be formed without being twisted or bent even when pressed by the punching part 500. Of course, by increasing the number of punching dies 600, a larger number of electrode installation recesses 160 can be secured, and the positions of the punching dies 600 may be adjusted to make the sizes of a plurality of electrode installation recesses 160 different.

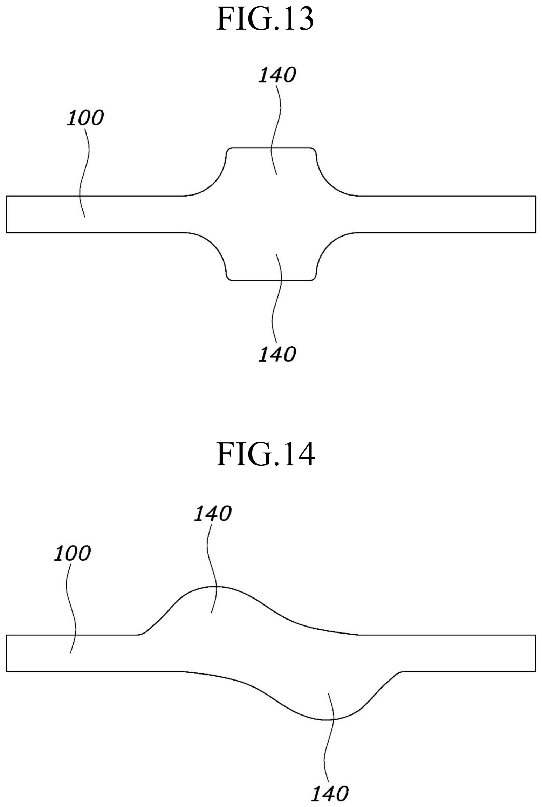

The press roll 300 having the plurality of concave portions 320 formed thereon may be provided as a pair, as shown in FIG. 4, to contact both sides of the plate-shaped material 100 in order to more effectively control the thickness of the plate-shaped material 100. The pair of press rolls 300 and 300' provided on both sides of the plate-shaped material 100 may form embossed portions 120 at a point where they overlap in the plate-shaped material 100 by pressing and rolling the plate-shaped material 100 in the same direction, as shown in FIG. 13. Compared to forming the embossed portions 120 on one side of the plate-shaped material 100, the embossed portions 120 corresponding to the stretched portions 180 vulnerable to cracking and tearing when forming the electrode installation recesses 160 can be formed to be thicker on the plate-shaped material 100 by forming the embossed portions 120 on the overlapping portions on both sides of the plate-shaped material 100, and thus the plate-shaped material 100 can be more reliably prevented from being cracked or torn when stretched by pressing of the punching part 500.

The pair of press rolls 300 and 300' arranged to be in contact with both sides of the plate-shaped material 100 may have the same shape and material. In this case, the pair of press rolls 300 and 300' include the concave portions 320 of the same shape and may press and roll both sides of the plate-shaped material 100 to form the embossed portions 120 that overlap at the same point on the plate-shaped material 100 and have the same shape, as shown in FIG. 13. Alternatively, the concave portions 320 may be formed on only one 300 of the press rolls 300 and 300. In this case, the press roll 300 having the concave portions 320 presses and rolls the plate-shaped material 100 to form the embossed portions 120, and the press roll 300' without the concave portions 320 presses the plate-shaped material 100 without forming the embossed portions 120. Although the pair of press rolls 300 and 300' may press the same point on the plate-shaped material 100, they may be spaced apart from each other and press different points to form the embossed portions 120 on both sides, as shown in FIG. 14. When the concave portions 320 are formed on both of the press rolls 300 and 300' and have different shapes, embossed portions 120 of different shapes may be formed on both sides of the plate-shaped material 100.

When the pair of press rolls 300 and 300' are provided on both sides of the plate-shaped material 100, only the press roll 300 on one side of the plate-shaped material 100 performs pressing and rolling, and the press roll 300' on the opposite side simply supports the press roll 300 that presses the plate-shaped material 100 without pressing and rolling the plate-shaped material 100. In this case, as shown in FIGS. 10 to 12, the embossed portion 120 is formed only on one side of the plate-shaped material 100 directly pressed and rolled, and the press roll 300' that simply supports the plate-shape material 100 does not form the embossed portion 120.

In addition, rather than having the pair of press rolls 300 and 300' provided on both sides of the plate-shaped material 100 directly press the plate-shaped material 100, the plate-shaped material 100 may be directly moved between the pair of press rolls 300 and 300' having the concave portions 320 and pressed by itself to form the embossed portions 120 on one or both sides of the plate-shaped material 100. As the plate-shaped material 100 passes between the pair of fixed press rolls 300 and 300', the pair of press rolls 300 and 300' do not move but rotate in place to press the plate-shaped material 100, and thus the embossed portions 120 are formed on one side or both sides of the plate-shaped material 100 by the concave portions 320 provided on the pair of press rolls 300 and 300'.

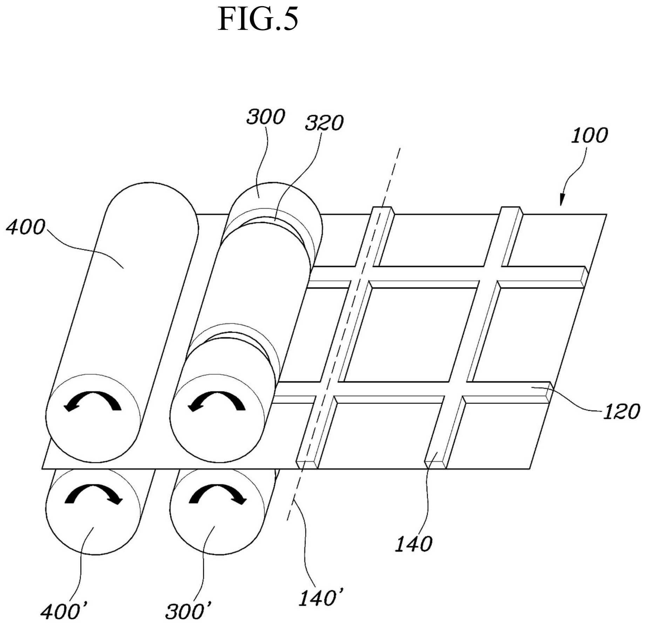

Referring to FIG. 5, in the battery cell packaging manufacturing system of the present disclosure, in addition to the press roll 300 that presses and rolls the plate-shaped material 100 to form the embossed portions 120 on one side or both sides of the plate-shaped material 100 using the concave portions 320, a preceding press roll 400 may be provided. The preceding press roll 400 is positioned in front of the press roll 300 on which the concave portions 320 are formed and performs a flattening operation of first pressing and rolling the plate-shaped material 100 to make flat any folded or wrinkled portions existing on the plate-shaped material 100. The preceding press roll 400 may also be present on both sides of the plate-shaped material 100, and a pair of preceding press rolls 400 and 400' present on both sides move the plate-shaped material 100 in the same direction to perform the flattening operation.

The concave portions 320 are not formed on the preceding press roll 400, and thus preceding press roll 400 does not form the embossed portions 120 on the plate-shaped material 100 and serves to flatten the plate-shaped material 100 such that the subsequent press roll 300 on which the concave portions 320 are formed can form accurate and uniform embossed portions 120 on the plate-shaped material 100. However, if the preceding press roll 400 presses the plate-shaped material 100 too strongly, the thickness of the plate-shaped material 100 may decrease, making it difficult for the subsequent press roll 300 on which the concave portions 320 are formed to form the embossed portions 120 on one or both sides of the plate-shaped material 100. Therefore, it is desirable to adjust the pressing force of the preceding press roll 400 to be less than that of the subsequent press roll 300 such that the preceding press roll 400 can focus on the role of making wrinkles or folded portions existing in the plate-shaped material 100 flat.

The embossed portions 120 formed on one or both sides of the plate-shaped material 100 are stretched by being pressed by the punching part 500 as shown in FIG. 7, and in the embossed portions 120, the stretched portion 180 that first comes into contact with the corner of the punching part 500 is the thickest, and thus cracking and tearing of the plate-shaped material 100 can be prevented. Specifically, the cross-sectional shape of the embossed portion 140 may be a trapezoidal shape with curved sides as shown in FIG. 11, and the side edges of the trapezoidal shape may be formed with the radius of the press roll 300 as the radius of curvature. Since the cylindrical press roll 300 presses and rolls the plate-shaped material 100, the side edges of the trapezoidal shape are formed in a streamlined shape rather than a straight line, and a constant pressing force is applied by the press roll 300 on the upper surface of the embossed portion 120 to form a flat plane. If it is necessary to adjust the side thickness of the electrode installation recesses 160, the size of the embossed portion 120 can be decreased or increased, and in some cases, the embossed portion 120 may have various shapes such as an arc as well as a streamlined shape on the side edges of the cross section.

In addition, the embossed portions 120 and 140 of the plate-shaped material 100 may not necessarily have a symmetrical shape, but may also have asymmetrical streamlined shapes, as in FIG. 11 or FIG. 12. Since the embossed portions 120 and 140 are stretched the most at the point 180 that first comes into contact with the corner of the punching part 500, cracking or tearing of the plate-shaped material 100 frequently occurs. Accordingly, the stretched portion 180 of the embossed portions 120 and 140, which first comes into contact with the corner of the punching part 500, may be formed to be the thickest, and the remaining portions may be formed to be gradually thinner, thereby forming asymmetrical embossed portions 120 and 140. In the case of FIG. 11, the portion 180 that comes into direct contact with the punching part 500 is formed on the far side from the electrode installation recess 160, and thus when the electrode installation recess 160 is pressed, the thick embossed portions 120 and 140 are pressed toward the embossed portions 120 and 140 with a gentle slope, thereby forming the side surface of the electrode installation recess 160. In the case of FIG. 12, the portion 180 pressed by the electrode installation recess 160 is the thickest part of the embossed portions 120 and 140, and thus when pressed by the punching part 500, the part is pressed toward the side of the embossed portions 120 and 140 with a steep slope, thereby forming the side surface of the electrode installation recess 160.

The asymmetrical embossed portions 120 and 140 may be formed through gradual position control or pressing force control of the press roll 300, and thick parts of the embossed portions 120 and 140 may be formed in a desired direction or at desired positions, thereby simplifying the manufacturing process and providing an economical solution to cracking or tearing of the plate-shaped material 100.

Meanwhile, when the press rolls 300 and 300' are provided on both sides of the plate-shaped material 100, the embossed portions 120 and 140 may be formed on both sides of the plate-shaped material 100 as shown in FIG. 13 or FIG. 14. In this case, the embossed portions 120 and 140 may be formed to overlap each other at the same point on both sides of the plate-shaped material 100 with the same size, as shown in FIG. 13, or may be formed such that only some portions thereof overlap each other on the opposing sides of the plate-shaped material 100, as shown in FIG. 14, and may overlap in different shapes on both sides of the plate-shaped material 100 depending on the shape of the concave portions 320 provided on the press rolls 300 and 300'. In addition, the pair of press rolls 300 and 300' may press and roll both sides of the plate-shaped material 100 at different points to form the embossed portions 120 at adjacent positions without overlapping each other by the concave portions 320 provided on the press rolls 300 and 300' on the plate-shaped material 100. In addition, by controlling the position or pressing force of the press rolls 300 and 300', the embossed portions 120 may be formed in asymmetrical streamlined shapes to overlap or be adjacent to each other on both sides of the plate-shaped material 100.

When the plate-shaped material 100 is formed into the battery cell case, the portion 180 that is most vulnerable to cracking and tearing is stretched the most and forms the side of the battery cell case. Therefore, by thickening the embossed portion 120 corresponding to the stretched portion 180 in the asymmetrical streamlined shape, even if the plate-shaped material 100, which is a thin aluminum plate, is stretched by the punching part 500, cracking or tearing can be prevented.

The shapes of the embossed portions 120 and the embodiments of FIGS. 10 to 14 describe the cross section A-A' of the lengthwise embossed portion 120 shown in FIG. 6, but may be applied to not only the lengthwise embossed portion 120 but also the widthwise embossed portion 140. The lengthwise embossed portion 120 may have various shapes by forming the concave portion 320 in various shapes when the concave portion 320 is formed on the press roll 300, and the widthwise embossed portion 140 may be formed in various shapes as shown in FIGS. 10 to 14 by controlling the position or pressing force of the press roll 300, or forming the concave portion 340 in the longitudinal direction of the press roll 300. Therefore, various embossed portions 120 and 140 can be formed as long as the embossed portions 120 and 140 have the thickest stretched portion 180 corresponding to the punching part 500.

A pair of widthwise embossed portions 140 are formed at spaced points on the plate-shaped material 100, and thus a pair of lengthwise embossed portions 120 and a pair of widthwise embossed portions 140 form a square shape, and the punching part 500 presses the square formed by the lengthwise embossed portions 120 and the widthwise embossed portions 140 on the plate-shaped material 100 to form the electrode installation recess 160. In one electrode installation recess 160, the side surface is formed by pressing the lengthwise embossed portions 120 and the widthwise embossed portions 140, thereby forming a continuous side surface surrounding the bottom surface on which electrodes are laminated. The continuous side surface of the electrode installation recess 160 is the stretched portion 180, which is a portion where the largest stretching occurs when pressed by the punching part 500. By forming the portion corresponding to the stretched portion 180 using the lengthwise embossed portions 120 and the widthwise embossed portions 140, the stretched portion 180 can secure sufficient thickness. Accordingly, even if the plate-shaped material 100 is pressed by the punching part 500, cracking or tearing of the plate-shaped material 100 can be prevented, and thus the stable side surface of the electrode installation recess 160 can be formed.

In the plate-shaped material 100, a pair of widthwise embossed portions 140 are disposed spaced apart in the longitudinal direction of the plate-shaped material 100, and a pair of lengthwise embossed portions 120 are disposed spaced apart in the width direction of the plate-shaped material 100. Accordingly, a plurality of square-shaped electrode installation recesses 160 is formed due to intersection of a plurality of lengthwise embossed portions 120 and a plurality of widthwise embossed portions 140, and a pair of adjacent electrode installation recesses 160 are folded and overlapped along the boundary 170 therebetween to form one battery cell case. The boundary 170 between a pair of electrode installation recesses 160 is present between a pair of adjacent electrode installation recesses 160 as in FIG. 15 or FIG. 16, and may be present between the most adjacent embossed portions 120 between the two electrode installation recesses 160 as illustrated. In this case, a pair of embossed portions 120 are directly pressed by the punching part 500 to form the side surface of the electrode installation recess 160, and thus a pair of electrode installation recesses 160 may be folded based on the boundary 170 and overlap each other as shown in FIG. 17. In addition, a boundary 140' between a pair of electrode installation recesses 160 as in FIG. 5 or FIG. 6 may be present on a widthwise embossed portion 140. In this case, the boundary 140' is present together with the widthwise embossed portion 140 as illustrated, and a pair of electrode installation recesses 160 are folded and overlapped based on the boundary 140'. The widthwise embossed portions 140 need to form the side surfaces of the electrode installation recesses 160, and thus the widthwise embossed portion 140 including the boundary 140' has a shape that is sufficiently thicker and higher than other widthwise embossed portions 140 in order to smoothly perform the role of the boundary 140' between the electrode installation recesses 160 even after pressing by the punching part 500.

In addition, the boundary 140' illustrated in FIG. 5 or FIG. 6 is present on the widthwise embossed portion 140, but in some cases, the boundary 140' is present on the lengthwise embossed portion 120, and a pair of electrode installation recesses 160 may be folded and overlapped based thereon.

In the plate-shaped material 100, a plurality of widthwise embossed portions 140 and a plurality of lengthwise embossed portions 120 intersect each other to form a plurality of electrode installation recesses 160, and a pair of adjacent electrode installation recesses 160 form a battery cell case. A pair of electrode installation recesses 160 have the same shape as in FIG. 17, and are folded and overlapped based on the boundary 170 and sealed along the bonding portion 190 to form a battery cell case.

In this case, the bonding portion 190 is formed on the edge of the electrode installation recess 160, and this bonding portion 190 is formed along the outer perimeter of the embossed portions 120 that form the side surface of the electrode installation recess 160. The bonding portion 190 is a part that seals the battery such that the battery is not damaged by external physical impact or the internal environment when a pair of electrode installation recesses 160 overlap each other, and thus needs to be bonded without spacing, and is therefore a flat surface. Since the bonding portion 190 needs to be bonded without spacing, the remaining embossed portions 150 except for the embossed portions 120 pressed by the punching part 500 on one or both sides of the plate-shaped material 100 to form the electrode installation recesses 160 must be removed, and when the remaining embossed portions 150 are removed, the flat bonding portion 190 is secured more widely, and thus the battery cell case can be assembled without a gap when the pair of electrode installation recesses 160 are folded and overlapped through the boundary 170 and sealed along the bonding portion 190. When the pair of electrode installation recesses 160 are sealed along the bonding portion 190, they can be combined in various manners, such as bonding and mechanical fastening.

The plate-shaped material 100 is pressed and stretched by the punching part 500 to form one electrode installation recess 160, and electrode installation recesses 160 formed in this manner are paired to form a battery cell case. The electrode installation recesses 160 are formed to have the same size with a certain point as a boundary on one plate-shaped material 100 and have a bottom surface on which electrodes are laminated and a side surface surrounding the bottom surface. The electrode installation recesses 160 formed by pressing by the punching part 500 are folded along the boundary to overlap, and the portion except for the portion containing the electrodes is sealed along the bonding portion 190 to complete one battery cell. Since two electrode installation recesses 160 formed in the plate-shaped material 100 need to be folded along the boundary 170 provided therebetween and then overlapped and sealed, the remaining embossed portions 150 except for the embossed portions 120 forming the side surfaces of the electrode installation recesses 160 need to be removed for assembly stability.

When formation of the embossed portions 120 on the plate-shaped material 100 for forming the electrode installation recesses 160 by the press roll 300 is completed, a plurality of intersecting embossed portions 120 and 140 are formed in the longitudinal and width directions of the plate-shaped material 100. The embossed portions 120 and 140 present on the outer side of the electrode installation recesses 160 except for the embossed portions 120 and 140 that are pressed and stretched by the punching part 500 to form the side surfaces of the electrode installation recesses 160 among the intersecting embossed portions 120 and 140 are the remaining embossed portions 150 and need to be removed because they may interfere with the process in which a pair of electrode installation recesses 160 are folded along the boundary therebetween, overlapped and sealed along the bonding portion 190. In this case, the battery cell packaging manufacturing system of the present disclosure may further include a post-processing part 700 for flattening the remaining embossed portions 150 present on the outer side of the electrode installation recesses 160 formed in the plate-shaped material 100, and thus the electrode installation recesses 160 can be formed first and then the remaining embossed portions 150 can be flattened. Alternatively, before the electrode installation recesses 160 are formed, the remaining embossed portions 150 may be removed in advance using the post-processing part 700 for flattening the remaining embossed portions 150 present on the outer side of the embossed portions 120 forming the electrode installation recesses 160 among the embossed portions 120 formed on the plate-shaped material 100, and then the embossed portions 120 may be pressed by the punching part 500, thereby forming the electrode installation recesses 160.

The post-processing part 700 may remove the remaining embossed portions 150 using various methods such as removing the remaining embossed portions 150 by pressing and rolling the same using a roller, removing the remaining embossed portions 150 by pressing the same using a press machine, removing the remaining embossed portions 150 by cutting the same using a cutting machine, removing the remaining embossed portions 150 using a laser machine, or removing the remaining embossed portions 150 using a tool that stretches the plate-shaped material 100.

As one example of the post-processing part 700, the remaining embossed portions 150 may be removed using a roller provided separately as shown in FIG. 15. The roller may remove the remaining embossed portions 150 regardless of formation of the electrode installation recesses 160, and may remove the remaining embossed portions 150 present on one or both sides of the plate-shaped material 100 by pressing and rolling the same excluding the embossed portions 120 that are pressed by the punching part 500 and directly form the side surfaces of the electrode installation recesses 160. In this case, after the formation of the electrode installation recesses 160 is completed, a pair of electrode installation recesses 160 need to be folded based on the boundary 170 therebetween to overlap and sealed along the bonding portion 190, and thus the roller presses the embossed portions 120 in consideration of the thickness of the portion of the plate-shaped material 100 where the embossed portions 120 are not formed when removing the remaining embossed portions 150. In addition, a plurality of rollers may be provided according to the size of the remaining embossed portions 150, the remaining embossed portions 150 may be removed by directly moving the roller, or the points where the remaining embossed portions 150 are formed may be removed by directly moving the plate-shaped material 100 without moving the roller.

In addition, to the roller, a post-processing press that covers part or the entire surface of the plate-shaped material 100, which is another example of the post-processing part 700, may be used to remove the remaining embossed portions 150 in the direction of the embossed portions 120 on the plate-shaped material 100. In order to remove only the remaining embossed portions 150 of the plate-shaped material 100, the post-processing press for removing only the remaining embossed portions 150 excluding the embossed portions 120 forming the side surfaces of the electrode installation recesses 160 may be provided to press the remaining embossed portions 150 of the plate-shaped material 100. Alternatively, the electrode installation recesses 160 may be formed in advance by the punching part 500, and then the remaining embossed portions 150 present on one surface of the plate-shaped material 100 may be removed by pressing the same using the press.

As another embodiment of the post-processing part 700, a cutting machine may be used to remove only the remaining embossed portions 150 on one side of the plate-shaped material 100. In this case, the portions corresponding to the remaining embossed portions 150 may be directly cut using the cutting machine before forming the electrode installation recesses 160, or all remaining embossed portions 150 present on one side of the plate-shaped material 100 may be cut and removed after forming the electrode installation recesses 160. In addition, the post-processing part 700 may include various tools for removing the remaining embossed portions 150, such as a separate laser device or a tool for stretching the plate-shaped material 100. As the remaining embossed portions 150 are removed, a pair of electrode installation recesses 160 are formed, and then folded and overlapped along the boundary 170 and sealed along the boding portion 190, and thus the two electrode installation recesses 160 can be stably fastened without any gap.

FIG. 18 is a flowchart of a battery cell packaging manufacturing method according to one embodiment of the present disclosure. In the battery cell packaging manufacturing method of the present disclosure, step S100 of supplying the plate-shaped material 100 is performed first. The plate-shaped material 100 may be a pouch sheet as described above, and may be in the shape of a film, a thin plate, or a panel. Thereafter, step S300 of forming embossed portions 120 on the plate-shaped material 100 is performed by pressing the supplied plate-shaped material 100 using the press roll 300 having the concave portions 320 formed thereon. Then, step S500 is performed in which the plate-shaped material 100 on which the embossed portions 120 are formed is pressed by the punching part 500 to form electrode installation recesses 160 in the plate-shaped material 100 such that the embossed portions 120 form the side surfaces of the electrode installation recesses 160. Since specific manufacturing in each process has been sufficiently described above, a detailed description is omitted.

Meanwhile, the battery cell packaging manufacturing system according to the present disclosure can be applied when manufacturing battery cell packaging applied to battery packs of various vehicles such as internal combustion engine vehicles, electric vehicles, hybrid vehicles, and fuel cell vehicles, and in addition to vehicles, it can also be applied when manufacturing battery cell packaging applied to battery packs in various fields such as industrial energy storage system (ESS) and household ESS, and small battery packs.

Although the present disclosure has been illustrated and described with respect to specific embodiments thereof, it will be apparent to those skilled in the art that the present disclosure can be variously improved and modified without departing from the technical spirit of the present disclosure as defined by the following claims.

### [INDUSTRIAL APPLICABILITY]

The present disclosure can provide a battery cell packaging manufacturing system and manufacturing method that can prevent cracking or tearing of a plate-shaped material when the plate-shaped material is pressed by a punching part in a battery cell packaging manufacturing process, and at the same time stably form a battery cell case.

## Claims

1. A battery cell packaging manufacturing system, comprising:
a press roll for pressing and rolling a plate-shaped material, the press roll having a concave portion extending along the circumference of the press roll, and forming embossed portions on the plate-shaped material through the concave portion when the plate-shaped material is rolled; and
a punching part for forming an electrode installation recess in the plate-shaped material by pressing a point of the plate-shaped material, and causing the embossed portions of the plate-shaped material to be stretched to form a side surface of the electrode installation recess.

2. The battery cell packaging manufacturing system of claim 1, wherein the concave portion of the press roll is formed by recessing a point of the press roll toward the inside of the press roll.

3. The battery cell packaging manufacturing system of claim 2, wherein the concave portion has a ring shape extending along the outer circumference of the press roll.

4. The battery cell packaging manufacturing system of claim 1, wherein the press roll presses the plate-shaped material to reduce the thickness of the plate-shaped material, and the embossed portions are formed at points of the plate-shaped material corresponding to the concave portion of the press roll.

5. The battery cell packaging manufacturing system of claim 1, wherein a pair of concave portions are formed at positions spaced apart from each other on the outer circumference of the press roll.

6. The battery cell packaging manufacturing system of claim 5, wherein the plate-shaped material has a pair of lengthwise embossed portions formed corresponding to the pair of concave portions and extending in the longitudinal direction.

7. The battery cell packaging manufacturing system of claim 6, wherein, in the plate-shaped material, the pair of embossed portions spaced apart from each other form an embossed portion set, and the pair of embossed portions of the embossed portion set form facing side surfaces of the electrode installation recess.

8. The battery cell packaging manufacturing system of claim 7, wherein a plurality of embossed portion sets spaced apart from each other is formed on the plate-shaped material, a plurality of electrode installation recesses is formed in the plate-shaped material using the punching part, and the plurality of embossed portion sets constitute side surfaces of the corresponding electrode installation recesses.

9. The battery cell packaging manufacturing system of claim 1, wherein lengthwise embossed portions are formed on the plate-shaped material through the concave portions of the press roll, and the press roll forms widthwise embossed portions on the plate-shaped material through position or pressing force control during a process of rolling the plate-shaped material.

10. The battery cell packaging manufacturing system of claim 9, wherein the widthwise embossed portions of the plate-shaped material are formed by moving the position of the press roll away from the plate-shaped material in some section during a process of rolling the press roll or by reducing the pressing force applied to the plate-shaped material.

11. The battery cell packaging manufacturing system of claim 9, wherein a pair of widthwise embossed portions are formed on the plate-shaped material to be spaced apart from each other in the longitudinal direction of the plate-shaped material such that a pair of lengthwise embossed portions and the pair of widthwise embossed portions form a square shape.

12. The battery cell packaging manufacturing system of claim 11, wherein the punching part forms the electrode installation recess by pressing the square formed by the pair of lengthwise embossed portions and the pair of widthwise embossed portions, and the lengthwise embossed portions and the widthwise embossed portions are stretched to form a continuous side surface of the electrode installation recess.

13. The battery cell packaging manufacturing system of claim 1, wherein a pair of electrode installation recesses are formed in the plate-shaped material, and a bonding portion is formed on edges of the electrode installation recesses.

14. The battery cell packaging manufacturing system of claim 13, wherein the bonding portion is formed along the outer perimeter of the embossed portions forming the electrode installation recesses.

15. The battery cell packaging manufacturing system of claim 13, wherein the bonding portion forms a plane.

16. The battery cell packaging manufacturing system of claim 1, wherein the embossed portions are pressed and stretched by the punching part, and a point initially coming into contact with a corner of the punching part in the embossed portions is formed to be the thickest.

17. The battery cell packaging manufacturing system of claim 16, wherein a cross-sectional edge of the embossed portion is a streamlined curved shape.

18. The battery cell packaging manufacturing system of claim 1, further comprising a post-processing part for flattening remaining embossed portions present on the outside of the electrode installation recess formed in the plate-shaped material.

19. The battery cell packaging manufacturing system of claim 1, further comprising a post-processing part for flattening remaining embossed portions present on the outside of the embossed portions forming the electrode installation recess among the embossed portions formed on the plate-shaped material.

20. A battery cell packaging manufacturing method, comprising:
supplying a plate-shaped material;
forming embossed portions on the plate-shaped material by pressing the supplied plate-shaped material through a press roll on which a concave portion is formed; and
forming an electrode installation recess in the plate-shaped material by pressing the plate-shaped material on which the embossed portions are formed using a punching part such that the embossed portions forms a side surface of the electrode installation recess.
